Europäisches Patentamt

European Patent Office

Office européen des brevets

(11) Publication number: **0 262 747**
**A1**

## (12) EUROPEAN PATENT APPLICATION

(21) Application number: 87201887.4

(51) Int. Cl.4: **A01D 45/26** , A23N 15/00

(22) Date of filing: 02.10.87

(30) Priority: 02.10.86 NL 8602485

(43) Date of publication of application:
06.04.88 Bulletin 88/14

(84) Designated Contracting States:
BE DE FR GB NL

(71) Applicant: **Van Meijel Groenten B.V.**
**Espelerweg 52**
**NL-8311 PP Espel(NL)**

(72) Inventor: **Van Meijel, Johannes Lambertus**
**Franciscus**
**Espelerweg 52**
**NL-8311 PP Espel(NL)**

(74) Representative: **'t Jong, Bastiaan Jacobus**
**OCTROOIBUREAU ARNOLD & SIEDSMA**
**Sweelinckplein 1**
**NL-2517 GK 's-Gravenhage(NL)**

(54) **Apparatus for processing cauliflower into florets.**

(57) Apparatus for processing a cauliflower, that is for cutting cauliflower into florets by removing a heart, comprising a frame (2), a conveyor device (5) mounted on said frame and provided with holders (6) for cauliflowers (11), a drilling device (7) arranged close to said conveyor device having a drill which can move relative to each holder for drilling the heart out of a cauliflower accommodated in said holder, and drive means for said conveyor and drilling devices. Said apparatus is mobile and is provided with a driving source. Said conveyor device extends to a cutting and placing station (10) where cut cauliflower can be placed directly into said holders of said conveyor device.

## APPARATUS FOR PROCESSING CAULIFLOWER INTO FLORETS.

The invention relates to an apparatus for processing a cauliflower, that is for cutting cauliflower into florets by removing a heart, comprising a frame, a conveyor device mounted on the frame, which device is provided with holders for cauliflowers, a drilling device arranged close to the conveyor device having a drill which can move relative to each holder for drilling the heart out of a cauliflower accommodated in the holder, and drive means for the conveyor and drilling devices.

It is usual to cut cauliflowers by hand, to place them in large bins and to transport them in these bins to such an apparatus. The cauliflowers are there taken out of the bins and placed in the apparatus to be processed into florets.

It has been found that processing cauliflower with such an apparatus is labour intensive and therefore costly. Damage to the cauliflower is moreover a regular occurrence.

The purpose of the invention is to give an apparatus of the type described in the preamble a form such that it can operate with comparatively little manpower and less damage is caused to the cauliflower.

This object is achieved in an apparatus according to the invention because the apparatus is mobile and is provided with a driving source, and because the conveyor device extends to a cutting and placing station where cut cauliflower can be placed directly into the holders of the conveyor device. As a result the apparatus can move directly over the field where the cauliflower is being grown. The steps which are usual in the state of the art of placing in bins, transporting the bins to the apparatus and again removing the cauliflower from the bins at that location are dispensed with entirely. Since the cauliflowers are touched only during cutting and placing in the holders of the conveyor, the risk of damage during use of the apparatus according to the invention is considerably smaller.

An extra advantage is that the offal released as a result of drilling out of the heart can be left behind on the land and does not have to be transported away separately.

In accordance with a preferred embodiment the apparatus comprises an agricultural tractor which provides the mobility and the driving source. By giving the apparatus a form such that the conveyor device, the drilling device and other parts needed for the processing of the cauliflowers are connected to the agricultural tractor with an auxiliary frame, use can be made of a tractor available for other purposes outside the cauliflower harvesting season.

The step from claim 3 results in an apparatus with which a large capacity can be achieved, since cutting of the cauliflower and placing thereof in the holders can be performed very rapidly.

A further favourable embodiment is characterized by the step from claim 4. Use of the rotary drilling device according to the invention enables continuous processing of the cauliflowers, so that the apparatus can operate at a large capacity. The placing station can be adapted in a simple manner to a large capacity by enlarging the portion of the conveyor device which extends in transverse direction. In this way more people can cut cauliflowers.

The form of the holders as stated in claim 5 contributes to a high processing speed of the cauliflowers.

The cut florets and the shreddings can be separated from each other in appropriate manner by employing the step from claim 7. the shreddings fall between the bars onto the ground, and the florets are guided to the discharge station.

When a rotary drilling device is employed, the conveyor device is driven in accordance with a preferred feature of the invention by the rotary device itself.

The invention is further elucidated hereinafter with reference to the description of an embodiment shown in the annexed figures.

Fig. 1 shows a partly schematic, perspective view of a preferred embodiment of an apparatus according to the invention.

Fig. 2 shows a detail section of the drilling device from the apparatus in fig. 1.

Fig. 3 shows a section along III-III in fig. 2 on a smaller scale.

Fig. 4 shows a perspective view of the drilling device in section along the line IV-IV from fig. 2.

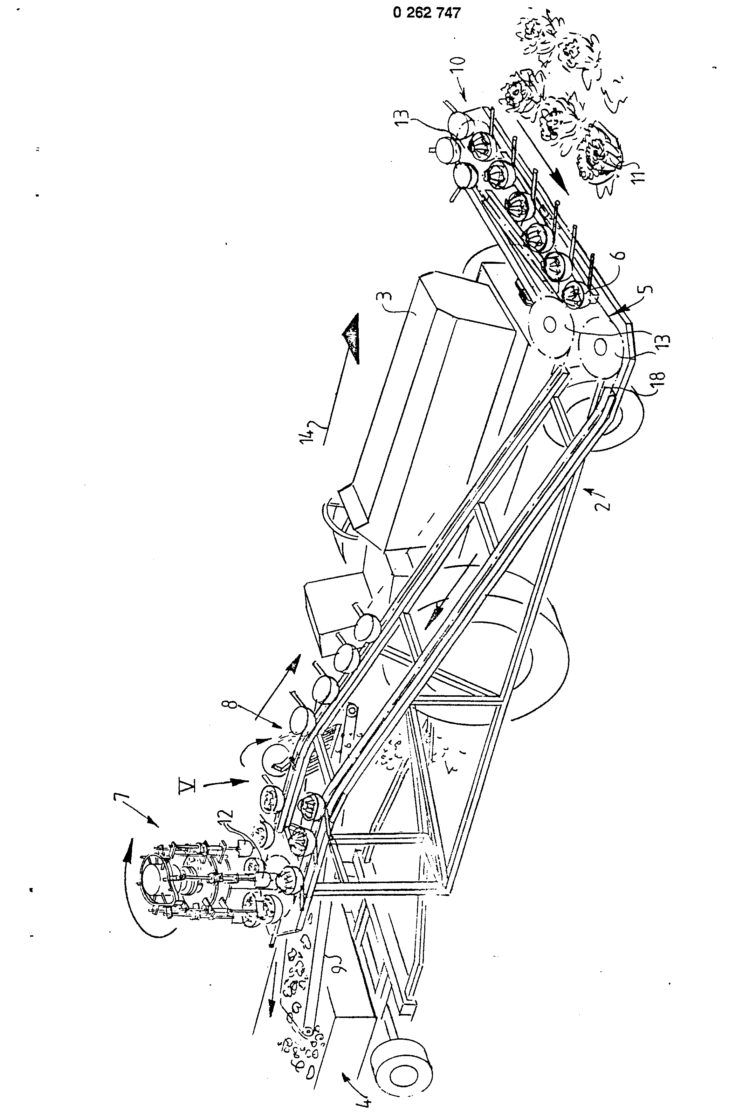

The apparatus 1 in fig. 1 for harvesting and cutting cauliflower into florets comprises an auxiliary frame 2 which is mounted on a per se known agricultural tractor 3. Attached behind tractor 3 is a trailer 4 in which the cauliflower florets are collected.

Arranged on the auxiliary frame 3 is a conveyor device 5. The conveyor device 5 comprises a closed, circulating chain 18 over the whole length of which are fitted holders 6 for cauliflowers 11. The chain is driven in the direction of the arrows in a manner to be further described later. The conveyor chain 18 is guided on the front part transversely to the travelling direction round guide pulleys arranged on frame 2 such that a placing station 10 is formed on this front part. In operation the apparatus travels in the directtion of movement 14 over a cauliflower field. A number of people walk in front of the apparatus cutting off cauliflowers 11 ready for harvesting and placing them in the holders 6 at the placing station 10, with the heart of the cauliflower facing upward. As a result of the movement of conveyor device 5 holders 6 are guided to the rear along the tractor 3 where they move successively through beneath a rotary drilling device 7. This drilling device 7 is described more comprehensively hereinafter.

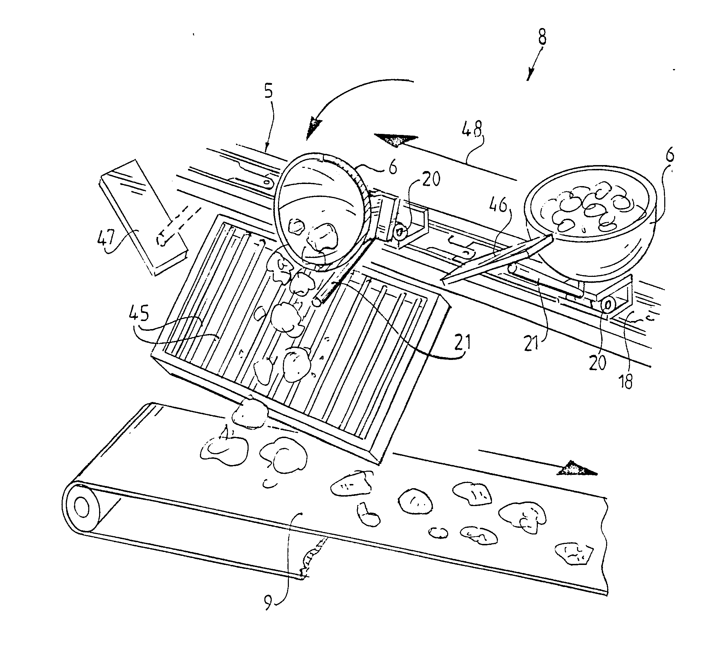

In the drilling device the heart is cut free of the cauliflower, as a result of which a quantity of shreddings is left behind in the holders together with the cut cauliflower florets. After passing through drilling device 7 holders 6 are emptied in a discharge station 8, whereby the shreddings are separated from the florets. The shreddings fall to the ground and the florets onto conveyor belt 9 which carries them to the trailer 4. The discharge station will be described later with reference to fig. 5.

The drilling device 7 comprises a number of drilling units 12 each of which co-operates with one holder of the conveyor device at a time and which moves synchronously therewith.

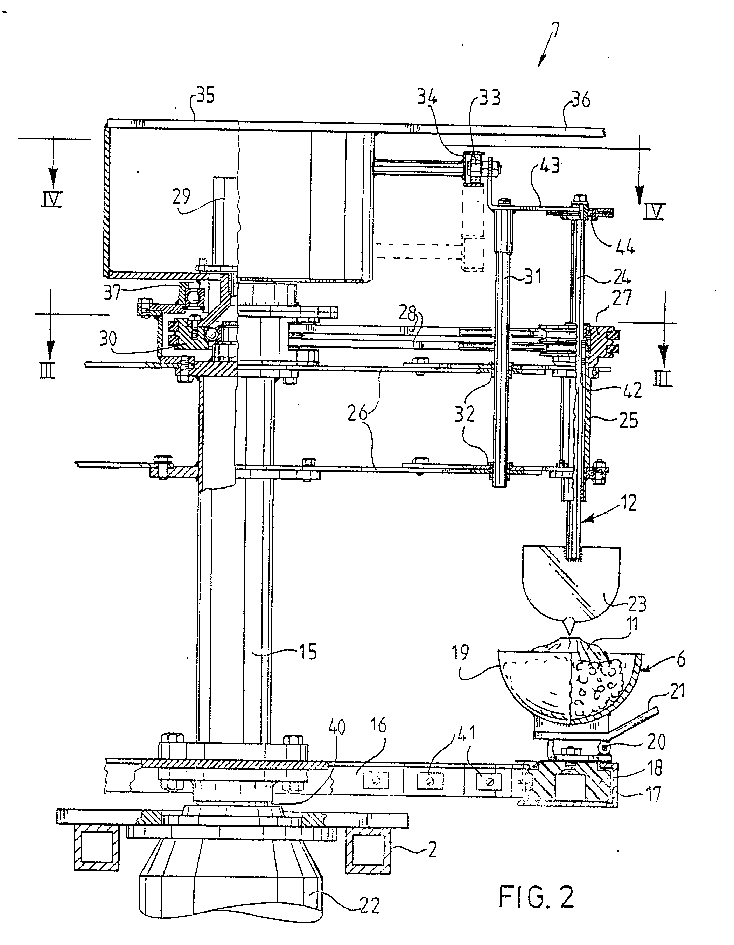

As shown in fig. 2, the drilling device 7 comprises a rotating pillar 15 which is connected rigidly to the output shaft 40 of a per se known motor/decelerating unit. At its top end pillar 15 is mounted on a housing 35 by means of the bearing 37. This housing 35 is coupled firmly to the frame 2 using a support 36 in a manner not further shown. Close to the bottom end the pillar 15 bears a driving pulley 16 for the conveyor chain 18. Conveyor chain 18 is accommodated in a guide chute 17 and is gripped by cams 41 on the periphery of the pulley. The motor 22 thus ensures the circular driving of the conveyor chain 18 having the holders 6 thereon.

As shown in fig. 2 holders 6 comprise a bowl 19 which is fitted on the chain 18 for tilting with a hinge 20. Connected to the tilting part is an actuating lever 21, the function of which will be further described later.

Each drilling unit 12 comprises a rod 24 which bears on its end close to the holder 6 a borer blade 23. This borer blade takes the form in the embodiment shown of a flat blade with highly sharpened edges and a centring point at the bottom. The rod 24 is guided for vertical sliding in a bushing 25 which is itself mounted for rotation in two discs 26 connected rigidly to pillar 15. The rod 24 is connected for rotation with bushing 25 by means of a key 42. The bushing 25 bears a pulley 27 into which grips a V-rope 28. This V-rope 28 is driven by a pulley 30 positioned coaxially to pillar 15, this pulley being driven by the motor 29 connected to housing 35.

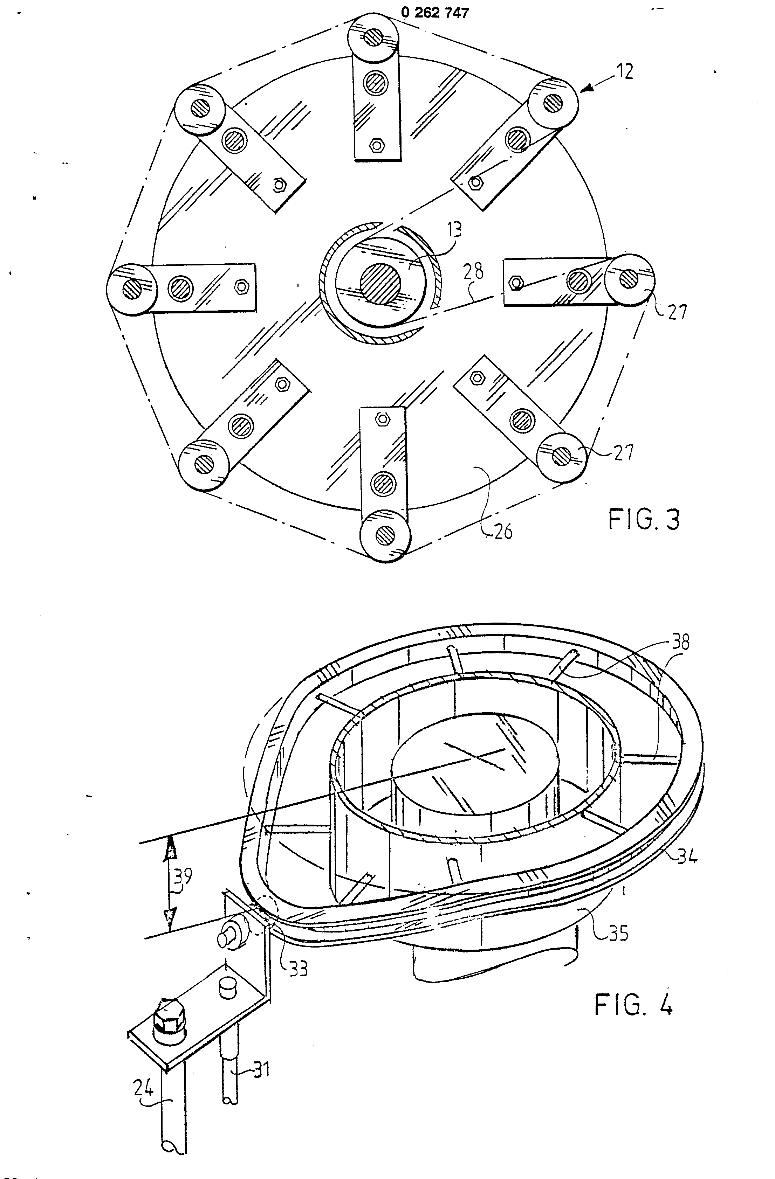

As fig. 3 shows, in the embodiment shown eight drilling units 12 are disposed in the manner drawn. The path of movement of the V-rope is indicated with dash and dot lines. As a result of the rotation of motor 29 and therefore of pulley 30, all the pulleys 27 of the drilling units are driven and the borer blades 23 are set into rotation as a result.

The drill rod 24 is connected at its top end for rotation with a bracket 43 by means of a bearing 44. The bracket 43 is rigidly connected to a guide rod 31 extending parallel to drill rod 24, this guide rod being guided slidably in bushings 32 in the discs 26. Bracket 43 further bears a cam follower roller 33 which is in gripping contact with a curve track 34 which, as fig. 4 shows, is firmly connected by means of supports 38 to housing 35. The curve track 34 extends for the greater part in one radial plane and, as viewed in peripheral direction, leads to a lower lying part of the boring stroke 39 and back again.

It will be apparent that the intermediate spacing of holders 6 on the conveyor chain 18 is equal to the intermediate spacing of two successive drilling units as seen in peripheral direction of the rotary device 7. As a result, during rotation movement of the drilling unit 7 each drilling unit 12 remains coaxial to a holder located beneath it. As a result of gripping of the cam follower roll 33 in the curve track 34 the drilling unit 12 is moved, during the half revolution of rotary device 7 and while its borer blade 23 is rotated by motor 29, downward relative to holder 6 and back again. The borer blade 23 hereby cuts out the heart of the cauliflower 11 placed in the bowl 19. Remaining behind in bowl 19 as a result after the borer blade 23 has moved downward and again upward are fine shreddings and cauliflower florets. As fig. 1 shows, holders 6 are moved, following the half stroke, round the drilling device 7 into the discharge station 8. This discharge station is shown further in fig. 5. The holders 6 that are moved forwards in the direction of arrow 48 by the conveyor chain 18 come into contact via actuating lever 21 with a guide 46 which, with the advancing movement of the chain 18, presses this lever 18 downward. As a result the bowl tilts on the hinge 20 whereby the contents fall out of the bowl. These contents fall onto a grid 45 with a number of bars. The spacing of the bars is arranged such that the shreddings can fall through them onto the ground. The florets, however, slide over the bars onto conveyor belt 9 and are carried away to the trailer 4. With continued movement of conveyor chain 18 the actuating lever 21 again comes into contact with an ascending guide 47 which tilts holder 6 upright again. The holders 6 thus reset in upright position then move forward again along the tractor 3 to the placing station 10 where a freshly cut cauliflower 11 can be placed in the holder 6.

Since the conveyor device 5 and the drilling device 7 operate continuously, that is, not step-wise, a high speed can be achieved without problem. A large number of cauliflowers can thus be cut per hour with one apparatus according to the invention. By increasing the length of the placing station 10 in transverse direction, this capacity can be fully utilized, since a great number of cutters can harvest a wider strip of cauliflowers.

## Claims

1. Apparatus for processing a cauliflower, that is for cutting cauliflower into florets by removing a heart, comprising a frame, a conveyor device mounted on said frame and provided with holders for cauliflowers, a drilling device arranged close to said conveyor device having a drill which can move relative to each holder for drilling the heart out of a cauliflower accommodated in said holder, and drive means for said conveyor and drilling devices, characterized in that said apparatus is mobile and is provided with a driving source, and that said conveyor device extends to a cutting and placing station where cut cauliflower can be placed directly into said holders of said conveyor device.

2. Apparatus as claimed in claim 1, characterized in that said apparatus comprises an agricultural tractor which provides the mobility and the driving source.

3. Apparatus as claimed in claims 1 and 2, characterized in that the conveyor device comprises a portion which extends on the front part of said apparatus transversely to the direction of travel and which forms the placing station.

4. Apparatus as claimed in any of the foregoing claims, characterized in that the drilling device comprises a rotary drilling device which rotates synchronously with the conveyor device guided around it and which bears a number of drilling units each corresponding with the axis of a holder, and which are in gripping contact with a fixed cam track causing a movement of said drilling units directed towards the relevant holder and away from it again.

5. Apparatus as claimed in any of the foregoing claims, characterized in that the holders are bowl-form holders connected to the conveyor device for tilting which can move between a first position in which a cauliflower can be supported and a second position in which the contents of said holder can fall out of same.

6. Apparatus as claimed in claim 5, characterized in that arranged subsequent to the drilling device in the direction of movement of the conveyor device is a tilting device tilting the holders from the first into the second position.

7. Apparatus as claimed in claim 6, characterized in that beneath the tilting device is arranged a grid having grid bars defining a sloping guide surface leading to a discharge station.

8. Apparatus as claimed in claim 7, characterized in that in the discharge station is arranged a conveyor belt leading to a tipper trailer coupled on behind the apparatus.

9. Apparatus as claimed in any of the claims 4-8, characterized in that the conveyor device is driven by the rotary drilling device.

FIG. 2

0 262 747

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 868 533 (HARTMANN) <br> * Whole document * <br> --- | 1 | A 01 D 45/26 <br> A 23 N 15/00 |
| A | US-A-1 756 262 (SHARPE) <br> * Whole document * <br> --- | 1,4 | |
| A | FR-A-2 138 890 (BLEINROTH) <br> * Page 7, line 22 - page 8, line 24 * <br> --- | 1-3,8 | |
| A | US-A-4 168 597 (CAYTON) <br> * Column 3, line 56 - column 4, line 20 * <br> --- | 1,3,5 | |
| A | NL-A-6 615 391 (INSTITUT FÜR OBST- UND GEMÜSEVERARBEITUNG) <br> --- | | |
| ·A | FR-A-2 376 632 (JOURDAN) <br> --- | | |
| A | US-A-3 252 491 (WOOLDRIDGE) <br> --- | | |
| A | US-A-1 766 824 (JONES) <br> --- | | TECHNICAL FIELDS SEARCHED (Int. Cl.4) |
| A | US-A-4 241 096 (SHAW) <br> --- | | A 01 D <br> A 23 N |
| A | US-A-4 453 458 (ALTMAN) <br> ----- | | |

The present search report has been drawn up for all claims

| Place of search | Date of completion of the search | Examiner |
|---|---|---|
| THE HAGUE | 16-12-1987 | DE LAMEILLIEURE D. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P0401)